Europäisches Patentamt

European Patent Office

Office européen des brevets

(11) Veröffentlichungsnummer: **0 371 337**
**A2**

(12) **EUROPÄISCHE PATENTANMELDUNG**

(21) Anmeldenummer: **89121210.2**

(22) Anmeldetag: **16.11.89**

(51) Int. Cl.5: **A01G 17/06**

(30) Priorität: **29.11.88 DE 8814858 U**

(43) Veröffentlichungstag der Anmeldung:
**06.06.90 Patentblatt 90/23**

(84) Benannte Vertragsstaaten:
**AT BE CH DE ES FR GB GR IT LI LU NL SE**

(71) Anmelder: **Schmidt-Schicketanz, Hans-Jürgen**
**Gerlichstrasse 12**
**D-8000 München 60(DE)**

(72) Erfinder: **Schmidt-Schicketanz, Hans-Jürgen**
**Gerlichstrasse 12**
**D-8000 München 60(DE)**

(74) Vertreter: **Kohlmann, Karl Friedrich, Dipl.-Ing.**
**et al**
**Hoffmann, Eitle & Partner Arabellastrasse 4**
**(Sternhaus)**
**D-8000 München 81(DE)**

(54) **Rankhilfe zur Begrünung einer Wand.**

(57) Um eine konstruktiv einfach aufgebaute, stabile und optisch ansprechende Rankhilfe zur Begrünung einer Wand, insbesondere einer Lärmschutzwand zu schaffen, werden in der Wand verankerbare Kragarme (2), einem wesentlichen horizontal verlaufendes langgestrecktes Tragprofil sowie mehrere, im Abstand nebeneinander angeordnete und vertikal verlaufende Rankelemente vorgesehen, die im Bereich ihres oberen Endes an dem Tragprofil befestigt sind, wobei erfindungsgemäß die Kragarme (2) an ihren freien Enden als Verbindungsstücke (3) ausgebildet sind, das Tragprofil aus einem oder mehreren Profilabschnitten (6) besteht, welche sich jeweils zwischen den Verbindungsstücken (3) zweier benachbarter Kragarme (2) erstrecken und die Rankelemente als starre Rankstangen (8) ausgebildet sind.

Fig.1

## Rankhilfe zur Begrünung einer Wand

Die Erfindung betrifft eine Rankhilfe zur Begrünung einer Wand, insbesondere Lärmschutzwand, mit in der Wand verankerbaren Kragarmen, einem im wesentlichen horizontal verlaufenden, langgestreckten Tragprofil, sowie mehreren, im Abstand nebeneinander angeordneten und vertikal verlaufenden Rankelementen, die im Bereich ihres oberen Endes an dem Tragprofil befestigt sind.

Aus der deutschen Patentschrift 344 649 ist ein zerlegbares Wandspalier bekannt, dessen senkrechte Reihen aus geradegestreckten Drahtstücken mit hakenartig umgebogenen Enden gebildet sind, während die waagerechten Reihen aus Drahtstücken bestehen, an deren geraden mittleren Teil sich rechtwinklig einander parallel abgebogene Teile mit Hakenenden anschließen, wobei die Verbindungsglieder an den Kreuzungsstellen der waagerechten Reihen mit den senkrechten Reihen durch Ringe gebildet sind, in welche die anderen Teile eingehakt werden. Der Befestigung des Wandspaliers dienen Mauerstifte mit halbkreisförmigen Ausnehmungen, in welche ein oberer, zweckmäßig aus Eisen bestehender Rundstab aufgelegt wird. Zur Montage werden Ringhaken auf den Rundstab, soweit nötig unter Anheben desselben, übergestreift und in Querrichtung gleichmäßig verteilt. Alsdann werden abwechselnd Ringe und Drahtstücke eingehakt zur Bildung der senkrechten Reihen. Ist die gewünschte Länge erreicht, so wird in den letzten Ring ein Ringhaken als Schlußstück eingehängt und schließlich ein Fußstab, der wiederum aus Eisen besteht, durch die Ösen der untersten Reihen von Ringhaken geschoben. Der Fußstab, der den unteren Abschluß des Spaliers bildet, muß an darunter befindliche Mauerstifte angebunden werden. Diese vorbekannte, aus einer Vielzahl von gebogenen Drahtstücken zusammengesetzte Rankhilfe kann den heutigen ästhetischen Ansprüchen nicht mehr gerecht werden; überdies ist sie umständlich zu montieren.

Aus der deutschen Offenlegungsschrift 35 31 515 ist ferner ein Rankgerüst bekannt, welches aus zwei Scharen von Stäben in waagerechten und senkrechten Achsen besteht, die durch Kupplungsstücke gehalten sind. Das Kupplungsstück besteht aus einem Kreuzstück mit vier hohlzapfenförmigen Ansätzen und weist eine mittige Bohrung auf, mit welcher es auf den Gewindeabschnitt eines Mauerankers aufgesteckt und durch eine aufgedrehte Mutter fixiert werden kann. Das Kupplungsstück kann auch aus kugelförmigen Knoten mit sechs Gewindebohrungen in drei senkrecht zueinander stehenden Achsen bestehen. Bei diesen Kupplungsstücken und den dazugehörigen Montageteilen handelt es sich um aufwendige Spezialteile, die in der Herstellung teuer sind. Aufgrund seines streng rasterartigen Aufbaus mit den Kupplungsstücken in den Kreuzungspunkten hat das vor eine Wand montierte Rankgerüst ein sehr technisches Aussehen; nachteilig ist ferner dessen hohes Gesamtgewicht aufgrund der massiven Ausführung.

Schließlich ist mit der deutschen Patentschrift 37 06 547 eine Vorrichtung zum Halten von Kletterpflanzen an Hauswänden bekannt geworden, welche aus mindestens zwei parallel zueinander verlaufenden geraden Stücken, die ein Gitter bilden, und aus U-förmigen Klammern, welche mit ihren Schenkeln rechtwinklig auf die geraden Stücke aufgesetzt und verschweißt sind, besteht. An den Stäben der U-förmigen Klammern befinden sich Halteplättchen zum Befestigen der Vorrichtung an der Hauswand. Diese Rankhilfe muß an vielen einzelnen Punkten mit der zu begründenden Hauswand verbunden werden, da die geraden Stücke, welche das Gitter bilden, sowie die Befestigungsklammern keine hohe Steifigkeit aufweisen.

Ausgehend von einem Stand der Technik gemäß der DE-PS 344 649 ist es Aufgabe der vorliegenden Erfindung, eine Konstruktion bereitzustellen, mit der eine konstruktiv sehr einfach aufgebaute, jedoch stabile und optisch ansprechende Rankhilfe zur Begrünung von Wänden erstellt werden kann, wobei besonderer Wert auf eine einfache Befestigung an der Wand mittels möglichst weniger Befestigungspunkte gelegt wird.

Die Lösung dieser Aufgabe besteht in der Weiterbildung der eingangs erwähnten Konstruktion derart, daß die in der Wand verankerbaren Kragarme an ihrem freien Ende als Verbindungsstück ausgebildet sind, daß das horizontal verlaufende Tragprofil aus einem oder mehreren Profilabschnitten besteht, welche sich jeweils zwischen den Verbindungsstücken zweier benachbarter Kragarme erstrecken, und dadurch, daß die Rankelemente als starre Rankstangen ausgebildet sind.

Die erfindungsgemäße Rankhilfe besteht aus nur wenigen und überdies konstruktiv einfachen Bauelementen, die sich vor Ort schnell und einfach zusammensetzen lassen. Nach der Verankerung der Kragarme in der zu begrünenden Wand werden die Profilabschnitte zwischen die Verbindungsstücke jeweils zweier benachbarter Kragarme eingesetzt und anschließend die Rankstangen daran befestigt. Das gesamte Gewicht der Rankstangen und der später diese umrankenden Begrünung wird von dem horizontal verlaufenden Tragprofil aufgenommen. Aufgrund der Ausbildung der Rankelemente als starre Rankstangen entfällt eine Verspannung nach unten, so daß die Kragarme nur mit dem Eigengewicht der Rankhilfe und der Begründung belastet werden.

Bei einer bevorzugten Ausführungsform weisen die Profilabschnitte und die Verbindungsstücke an den Kragarmen gleichen Querschnitt auf. Sind beispielsweise die Profilabschnitte als Tragrohre ausgebildet, welche, ebenso wie die Verbindungsstücke gleichen kreisförmigen Querschnitt aufweisen, ergibt sich ein stufenlos durchgehendes Tragprofil, das optisch als im Abstand vor der Wand schwebendes Rohr erscheint.

Die Profilabschnitte können aber auch als T-Profile ausgebildet sein oder aus zwei, mit ihren langen Schenkeln gegeneinander gesetzten L-Profilen bestehen. Wenn die Verbindungsstücke erfindungsgemäß ebenfalls in dem entsprechenden Querschnitt ausgeführt sind, ergibt sich auch in diesen Fällen die erwünschte Integration der freien Ende der Kragarme in das optisch durchgehende Tragprofil.

Das von dem Tragprofil und den Kragarmen aufzunehmende Gewicht der Rankhilfe und der zugehörigen Begrünung steigt mit zunehmender Länge der durchgehenden Rankstangen. Insbesondere dann, wenn höhere Wände begrünt werden sollen, ist es deshalb von Vorteil, die Kragarme mit einer zusätzlichen Zugstrebe auszustatten. Alternativ können die Kragarme auch aus einer Zugstrebe und einer Druckstrebe bestehen, welche unter Bildung eines spitzen Winkels vom Verbindungsstück ausgehen und die Gewichtskräfte, aufgeteilt als Zug- und Druckkräfte in die Wand einleiten.

Bevorzugt wird eine Ausführungsform, bei der die Rankstangen an ihrem oberen Ende, beispielsweise mittels eines kurzen Stücks Stahldraht, aufgehängt sind. Die Rankstangen können jedoch auch auf andere Weise mit dem sie tragenden Tragprofil verbunden werden, beispielsweise durch Schweißen oder mittels einer Schraubverbindung. Dabei können die Rankstangen mit ihrem oberen Ende auch über die Profilabschnitt hinausragen.

Sofern das horizontale Tragprofil aus runden Tragrohren zusammengesetzt ist, wird es aus ästhetischen Gesichtspunkten vorteilhaft sein, die Rankstangen ebenfalls als Rundstäbe oder als Rundrohre, wenn auch mit geringerem Durchmesser, auszubilden. Die Rankstangen können jedoch auch aus mehreren dünnen, parallel zueinander angeordneten Einzelstäben zusammengesetzt sein, welche von Distanzelementen in geringem Abstand voneinander gehalten werden. Denkbar sind auch dünne massive Rundstäbe, ebenso wie Vierkantprofile oder Kreuzprofile als mögliche Ausführungsformen der Rankstangen.

Die starre Ausbildung der Rankelemente als Rankstangen gewährleistet bei entsprechender Befestigung am oberen Tragprofil einen gleichmäßigen Abstand benachbarter Rankelemente über die gesamte Höhe der Rankhilfe hinweg und erübrigt auch eine Verspannung nach unten. Dennoch kann es zweckmäßig sein, zusätzlich wenigstens einen, horizontal verlaufenden Querstab, bevorzugt im unteren Bereich der Rankhilfe, vorzusehen und diesen an den Kreuzungspunkten mit den Rankstangen zu verbinden. Es können auch weitere derartige Querstäbe im Abstand nebeneinander angeordnet werden, so daß ein besonders stabiles und in sich versteiftes Gitterwerk entsteht.

Die erfindungsgemäße Rankhilfe kann ferner noch durch Abstandshalter ergänzt werden, welche zur Befestigung eines oder mehrerer zusätzlicher Querstäbe im gewünschten Abstand vor der Wand dienen.

Ausführungsbeispiele der Erfindung werden nachfolgend anhand der beigefügten Zeichnungen näher erläutert.

Es zeigen:

Fig. 1 eine im Abstand von einer Wand montierte Rankhilfe;

Fig. 2 alternative Ausführungsformen für die das Tragprofil bildenden Profilabschnitte und die daran befestigten Rankstangen einer Rankhilfe gemäß Fig. 1.

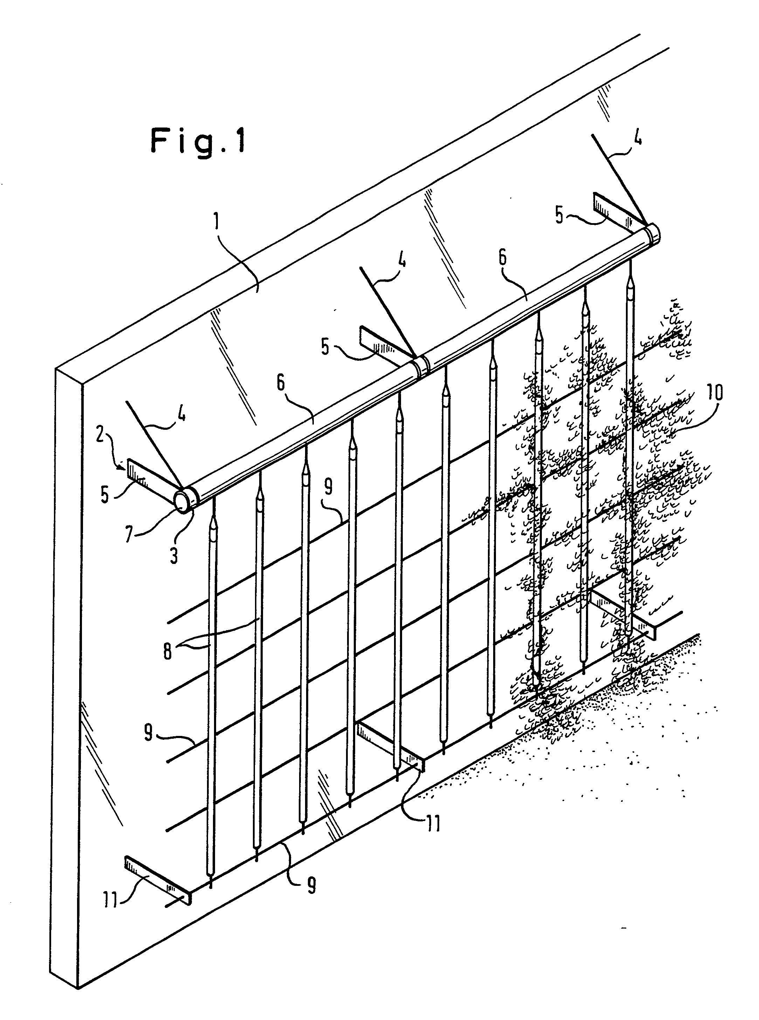

Die in Figur 1 dargestellte Rankhilfe ist vor eine Wand 1 vorgehängt. Der Verankerung in der Wand 1 dienen Kragarme 2, deren freien Enden als Verbindungsstücke 3 ausgebildet sind. Die Kragarme 2 umfassen jeweils eine Zugstrebe 4 und eine Druckstrebe 5, welche unter Bildung eines spitzen Winkels vom Verbindungsstück 3 ausgehen und in die Wand 1 laufen.

Das horizontal verlaufende Tragprofil ist aus mehreren Profilabschnitten 6 zusammengesetzt, welche sich jeweils zwischen den Verbindungsstücken 3 zweier benachbarter Kragarme 2 erstrecken. Diese Profilabschnitte 6 weisen den gleichen kreisförmigen Querschnitt auf wie die Verbindungsstücke 3. Profilabschnitte 6 und Verbindungsstücke 3 bilden somit ein ohne Stufe durchlaufendes horizontales Tragprofil, wobei die Profilabschnitte 6 seitlich an die Stirnseiten 7 der Verbindungsstücke 3 anschließen.

Als Rankelemente für die Begrünung 10 sind starre Rankstangen 8 an den Profilabschnitten 6 aufgehängt.

Zusätzliche, horizontal verlaufende Querstäbe 9 sind an den Kreuzungspunkten mit den Rankstangen 8 verbunden und bilden somit mit diesen ein Gitterwerk, an dem sich die Begrünung 10 emporranken kann. Der unterste Querstab 9 verläuft zwischen Abstandhaltern 11, die mit ihren freien Enden in der Wand 1 verankert sind.

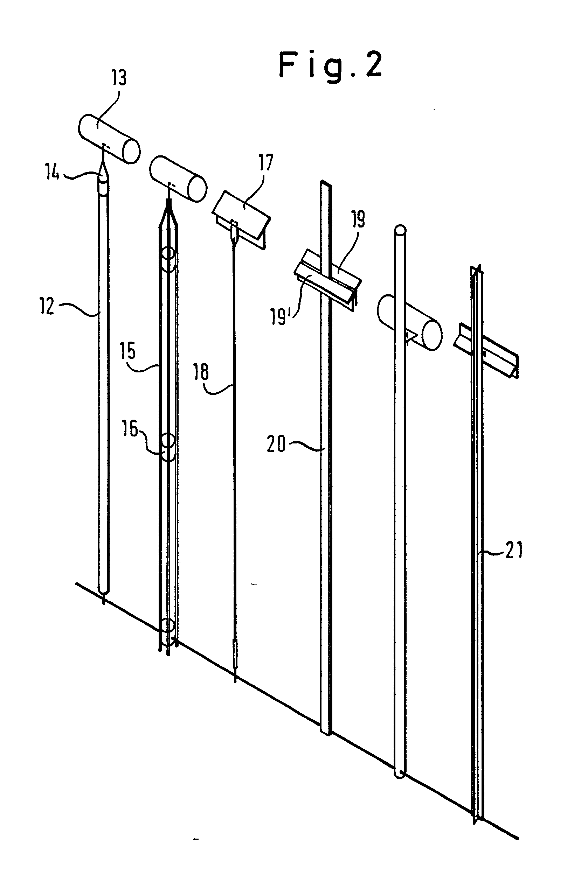

In Figur 2, links, ist die Ausführung der Rankstange 8 als massiver Rundstab 12 oder Rundrohr und die Ausbildung der Profilabschnitte 6 als rundes Tragrohr 13 in Übereinstimmung mit Figur 1 dargestellt. Der Rundstab 12 bzw. das Rundrohr tragen im Bereich des oberen Endes eine Spitze 14.

Eine weiterhin in Figur 2 dargestellte alternative Ausführung für die Rankstange 8 (vgl. Figur 1) besteht aus dünnen, parallel zueinander angeordneten Einzelstäben 15, die rings um zylindrische Distanzelemente 16 angeordnet und an ihren oberen Enden abgeknöpft und verschweißt sind.

Anstelle des Tragrohres 13 können die Profilabschnitte 6 (vgl. Figur 1) auch als T-Profile 17 und die zugehörigen Rankelemente als dünne massive Rundstäbe 18 ausgebildet sein.

Wie überdies in Figur 2 dargestellt, bestehen bei einer weiteren Ausführungsform die Profilabschnitte 6 aus zwei, mit ihren langen Schenkeln gegeneinander gesetzten L-Profilen 19 bzw. 19', zwischen den Rankstangen 8 in Form von flachen Vierkantprofilen 20 hindurch verlaufen, wobei diese mit ihren oberen Enden über die L-Profile 19, 19' hinausragen.

Schließlich zeigt Figur 2, ganz rechts, eine alternative Ausführungsform für die Rankstangen 8 in Form von Kreuzprofilen 21.

## Ansprüche

1. Rankhilfe zur Begrünung einer Wand, insbesondere Lärmschutzwand, mit
- in der Wand verankerbaren Kragarmen;
- einem im wesentlichen horizontal verlaufenden, langgestreckten Tragprofil;
- mehreren, im Abstand nebeneinander angeordneten und vertikal verlaufenden Rankelementen, die im Bereich ihres oberen Endes an dem Tragprofil befestigt sind;
dadurch **gekennzeichnet**, daß
- die Kragarme (2) an ihren freien Enden als Verbindungsstücke (3) ausgebildet sind;
- das Tragprofil aus einem oder mehreren Profilabschnitten (6) besteht, welche sich jeweils zwischen den Verbindungsstücken (3) zweier benachbarter Kragarme (2) erstrecken;
- die Rankelemente als starre Rankstangen (8) ausgebildet sind.

2. Rankhilfe nach Anspruch 1,
dadurch **gekennzeichnet**, daß
die Profilabschnitte (6) und die Verbindungsstücke (3) gleichen Querschnitt aufweisen.

3. Rankhilfe nach Anspruch 2,
dadurch **gekennzeichnet**, daß
die Profilabschnitte (6) und die Verbindungsstücke (3) kreisförmigen Querschnitt aufweisen.

4. Rankhilfe nach Anspruch 3,
dadurch **gekennzeichnet**, daß
die Profilabschnitte (6) als Tragrohre (13) ausgebildet sind.

5. Rankhilfe nach Anspruch 2,

dadurch **gekennzeichnet**, daß
die Profilabschnitte (6) als T-Profile (17) ausgebildet sind.

6. Rankhilfe nach Anspruch 5,
dadurch **gekennzeichnet**, daß
die Profilabschnitte (6) aus zwei, mit ihren langen Schenkeln gegeneinander gesetzten L-Profilen (19, 19') bestehen.

7. Rankhilfe nach einem der Ansprüche 1 bis 6,
dadurch **gekennzeichnet**, daß
die Kragarme (2) eine Zugstrebe (4) aufweisen.

8. Rankhilfe nach Anspruch 7,
dadurch **gekennzeichnet**, daß
die Kragarme (2) eine Zugstrebe (4) und eine Druckstrebe (5) umfassen, welche unter Bildung eines spitzen Winkels vom Verbindungsstück (3) ausgehen.

9. Rankhilfe nach einem der Ansprüche 1 bis 7,
dadurch **gekennzeichnet**, daß
die Rankstangen (8) an ihrem oberen Ende an den Profilabschnitten (6) aufgehängt sind.

10. Rankhilfe nach einem der Ansprüche 1 bis 7,
dadurch **gekennzeichnet**, daß
die Rankstangen (8) mit ihrem oberen Ende über die Profilabschnitte (6) hinausragen.

11. Rankhilfe nach einem der Ansprüche 1 bis 10,
dadurch **gekennzeichnet**, daß
die Rankstangen (8) als Rundrohre ausgebildet sind.

12. Rankhilfe nach einem der Ansprüche 1 bis 10,
dadurch **gekennzeichnet**, daß
die Rankstangen (8) aus mehreren dünnen, parallel zueinander angeordneten Einzelstäben (15) und Distanzelementen (16) zusammengesetzt sind.

13. Rankhilfe nach einem der Ansprüche 1 bis 10,
dadurch **gekennzeichnet**, daß
die Rankstangen (8) als massive Rundstäbe (12) vorzugsweise aus Holz ausgebildet sind.

14. Rankhilfe nach einem der Ansprüche 1 bis 10,
dadurch **gekennzeichnet**, daß
die Rankstangen (8) als flache Vierkantprofile (20) ausgebildet sind.

15. Rankhilfe nach einem der Ansprüche 1 bis 10,
dadurch **gekennzeichnet**, daß
die Rankstangen (8) als Kreuzprofile (21) ausgebildet sind.

16. Rankhilfe nach einem der Ansprüche 1 bis 15,
**gekennzeichnet** durch
einen oder mehrere zusätzliche Querstäbe (9), die horizontal verlaufen und an den Kreuzungspunkten mit den Rankstangen (8) verbunden sind.

17. Rankhilfe nach Anspruch 16, **gekennzeichnet** durch Abstandshalter (11) zur Befestigung der Querstäbe (9) im Abstand vor der Wand (1).

# Fig.1

# Fig.2